# EUROPÄISCHE PATENTSCHRIFT

(11) **EP 1 170 201 B1**
(45) Veröffentlichungstag und Bekanntmachung des Hinweises auf die Patenterteilung: **21.12.2005**
(21) Anmeldenummer: 01113481.4
(22) Anmeldetag: 02.06.2001
(51) Int. Cl.: B62J 17/04, B62J 17/00

(54) **Vorrichtung zur witterungsabhängigen Verstellung von Fahrzeugteilen**
Device for adjusting parts of a vehicle dependent on the weather conditions
Dispositif de réglage de pièces de véhicule en fonction des conditions climatiques

(30) Priorität: 04.07.2000 DE 10032341
(43) Veröffentlichungstag der Anmeldung: 09.01.2002
(73) Patentinhaber: Bayerische Motoren Werke Aktiengesellschaft, 80809 München (DE)
(72) Erfinder: Thoma, Rainer, 89269 Voehringen (DE)

(56) Entgegenhaltungen:
- EP-A- 0 911 250
- DE-A- 3 420 352
- DE-A- 3 941 875
- DE-A- 4 418 913
- DE-C- 4 130 226
- DE-C- 4 130 360
- DE-U- 29 814 310
- DE-U- 29 906 420
- US-A- 3 574 392
- US-A- 4 810 022
- US-A- 4 925 236
- PATENT ABSTRACTS OF JAPAN Bd. 0144, Nr. 40 (M-1028), 20. September 1990 (1990-09-20) & JP 2 175389 A (HONDA MOTOR CO LTD), 6. Juli 1990 (1990-07-06)

## Beschreibung

Die Erfindung betrifft eine Vorrichtung zur witterungsabhängigen Verstellung von Fahrzeugteilen.

Bei verschiedenen Fahrzeugen, insbesondere bei Motorrädern, ist eine vom Fahrer zu beeinflussende, insbesondere manuelle, Verstellung von Fahrzeug- bzw. Verkleidungsteilen bekannt. So sind Motorräder bekannt, die eine elektrische Windschildverstellung aufweisen. Dazu ist am Lenker ein Schalter angeordnet, über den ein Aktor betätigt werden kann, der das Windschild je nach Betätigung nach oben oder unten verschwenkt.

Ebenso sind Motorräder bekannt, bei denen bewegliche Finnen angeordnet sind, die der Fahrer je nach Wunsch und Witterungslage manuell einstellen kann. Bei hohen Umgebungstemperaturen kann durch eine geeignete Einstellung der Finnen einerseits eine kühlende Luftzuführung erreicht werden. Andererseits können die Finnen bei Regen so eingestellt werden, dass die Feuchtigkeit von Fahrer weggeleitet wird.

Des Weiteren ist aus der DE 41 30 226 C1 ein Verfahren zur Klimatisierung des Fahrzeuginnenraums eines Fahrzeugs beschrieben. Hierbei wird ein Schiebehebedach mittels einem über ein Steuergerät angesteuerten Antriebsmotor in Abhängigkeit von Innenraumtemperatur, Außentemperatur und dem Signal eines Regensensors automatisch geöffnet und verschlossen.

Es ist nun wünschenswert, die Einstellung der verstellbaren Verkleidungsteile automatisch, insbesondere in Abhängigkeit von der Witterung vornehmen zu lassen, so dass der Fahrer beispielsweise bei Niederschlägen eine möglichst hohe Windschildeinstellung vorfindet. Bei heisser Witterung wäre hingegen die Zufuhr von Frischluft automatisch umsetzbar. Entsprechend sollten auch Finnen bzw. andere Verkleidungsteile in Anpassung an die Witterung einstellbar sein, ohne dass ein Fahrer - eventuell unter der Fahrt - sich um die Einstellung gesondert kümmern muss.

Eine solche automatische Verstellung ist Aufgabe der vorliegenden Erfindung.

Diese Aufgabe wird durch die im Anspruch 1 genannten Merkmale gelöst.

Demgemäß ist eine Vorrichtung zur witterungsabhängigen Verstellung von Fahrzeugteilen vorgesehen, bei der zumindest ein Sensor eine Witterungskomponente erfasst. Aufgrund des Sensorsignals oder der Sensorsignale stellt eine Steuereinrichtung über einen Aktor das zumindest eine verstellbare Verkleidungsteil - beispielsweise das Windschild, die Finne oder ein ähnliches Verkleidungsteil - ein.

Als Sensor kann beispielsweise ein Temperatursensor für die Umgebungstemperatur oder ein Regensensor vorgesehen sein. Natürlich kann auch das Geschwindigkeitssignal verwendet werden. Insgesamt sind all diejenigen Signale für eine Verarbeitung bei der erfindungsgemäßen Vorrichtung interessant, die in Bezug auf die Einstellung der verstellbaren Verkleidungsteilen sinnvollerweise berücksichtigt werden sollten.

Eine weitere Ausführungsform der Erfindung ist dadurch gekennzeichnet, dass die Fahrgeschwindigkeit mitberücksichtigt wird und die Fahrzeugteile auch in Abhängigkeit von der Fahrgeschwindigkeit einstellbar sind. Dazu kann als weiterer Sensor ein Tachometer vorgesehen sein, dessen Signal verwendet wird.

Gemäß der Erfindung ist femer ein Kennfeld vorgesehen, in dem verschiedene, zumindest von einer Witterungskomponente abhängige Verstellwerte abgelegt sind, wobei die Verstellwerte auch auf die Fahrergröße abgestimmt sind. Die Fahrergröße müsste dann zu Beginn einer Fahrt oder bei einer Inbetriebnahme des Fahrzeugs eingestellt werden. Insbesondere kann das Kennfeld einspeicher- oder einstellbar ausgebildet sein. Dazu ist es von Vorteil, wenn am Lenker oder im Bereich des Lenkers ein Schalter zur Programmierung oder Auswahl des Kennfeldes vorgesehen ist. Ein solcher oder ein zusätzlicher Schalter könnte auch zur Überstimmung (Overrule-Modus) einer automatischen Einstellung vorgesehen werden.

Die erfindungsgemäße Vorrichtung eignet sich insbesondere zur Verwendung bei einem Motorrad.

Die Erfindung wird nachfolgend anhand verschiedener Ausführungsbeispiele und mit Bezug auf die beiliegenden Zeichnungen näher erläutert. Die Zeichnungen zeigen in
- Fig. 1: ein in Seitenansicht schematisch dargestelltes Motorrad mit einem verstellbaren Windschild,
- Fig. 2: ein in Frontsicht schematisch dargestelltes Motorrad mit verstellbaren Finnen und Seitenverbreiterungen und
- Fig. 3: ein einfaches Blockschaltdiagramm einer Ausführungsform der vorliegenden Erfindung.

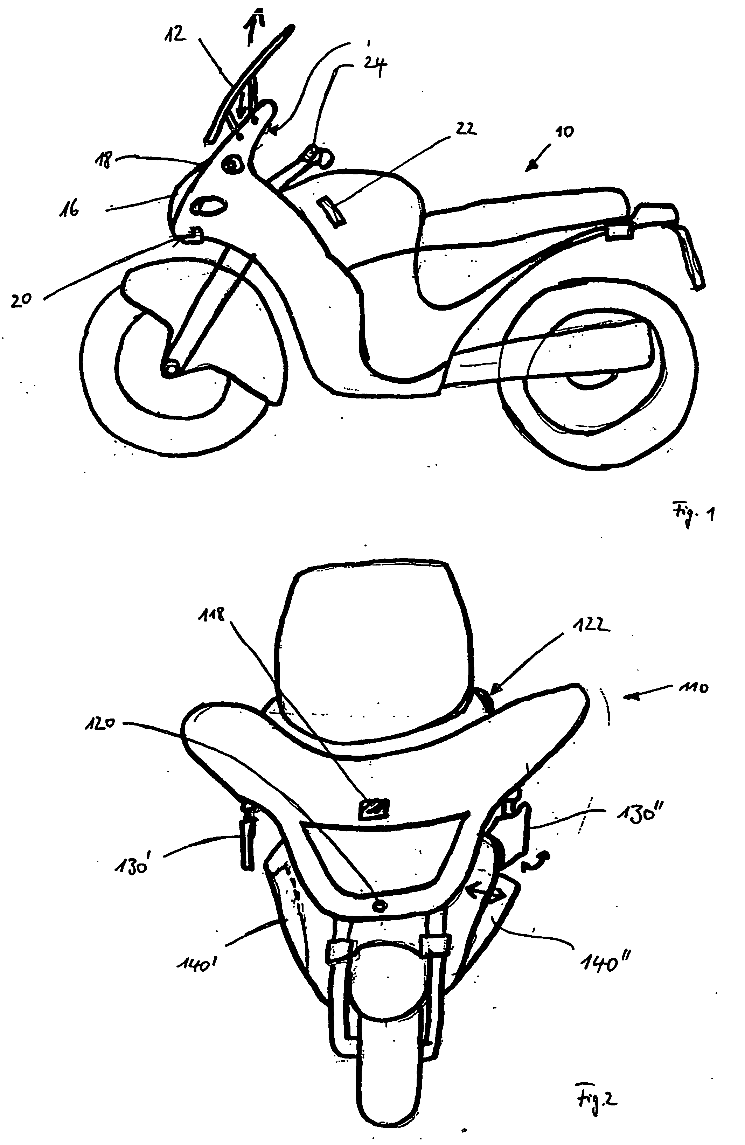

In Fig. 1 ist ein Motorrad schematisch in Seitenansicht dargestellt, welches ein in seiner Höhe und Steilheit verstellbares Windschild 12 aufweist. Dieses Windschild 12 kann mittels eines nicht näher dargestellten Aktors 14 verstellt werden. Sowohl die Anlenkung des Aktors 14 am Windschild 12 als auch die Anlenkung des Windschildes 12 am Motorrad sind allgemein bekannt und werden vorliegend nicht näher dargestellt.

Der Aktor 14 wird über eine Steuereinrichtung 22 angesteuert, welche im vorliegenden Fall im Bereich des Tanks angeordnet ist. Die Steuereinrichtung 22 erhält Signale von einem Regensensor 18, einem Temperaturfühler 20 sowie einem Tachometer (nicht dargestellt). Der Regensensor 18 ist vorliegend im Bereich des Frontlichts 16 des Motorrads integriert.

Über einen Schalter 24 am Lenker können verschiedene, im Steuergerät 22 enthaltene Kennfelder ausgewählt werden, die zu einer Größe eines bestimmten Fahrers passen. Je nach ausgewähltem Kennfeld verstellt sich das Windschild 12 dann entsprechend der von dem Regensensor 18 und Temperaturfühler 20 erfassten Witterung sowie der von dem Tachometer erfassten Geschwindigkeit. Ferner kann auch in einen manuellen Modus umgeschaltet werden, wodurch die einzelnen verstellbaren Verkleidungsteile mit dem Schalter 24 manuell bewegt werden können.

Natürlich können auch andere Signale zur Steuerung des verstellbaren Verkleidungsteils - hier des Windschildes 12 - verwendet werden.

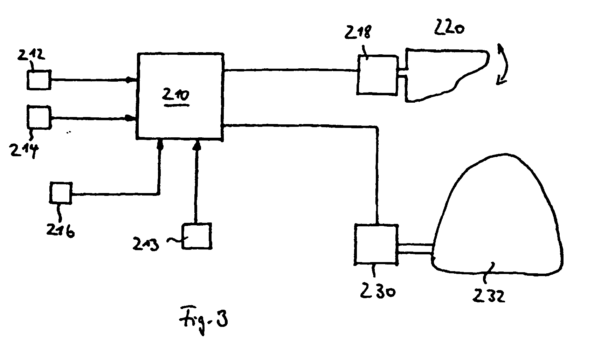

In Fig. 2 ist eine weitere Ausführungsform der vorliegenden Erfindung dargestellt. Dabei ist ein Motorrad 110 schematisch in Frontsicht gezeigt. Wiederum ist in der Frontseite ein Regensensor 118 sowie ein Temperaturfühler 120 zur Erfassung der Aussentemperatur angeordnet. Beide Sensoren 118, 120 sind mit einem nicht näher dargestellten Steuergerät 122 verbunden. Links- und rechtsseitig des Motorrads sind verschwenkbare Finnen 130', 130" sowie ausfahrbare Verkleidungsverbreiterungen 140' und 140" vorgesehen, die mittels nicht näher dargestellter Aktoren betrieben werden können. Die Aktoren werden von der Steuereinrichtung 122 beaufschlagt.

Je nach Witterungseinfluss, der über den Regensensor 118 und den Temperaturfühler 120 erfasst wird, werden die Finnen 130', 130" in Abhängigkeit von der Fahrgeschwindigkeit gedreht bzw. die Verkleidungsverbreiterungen 140', 140" nach aussen oder innen verschwenkt, wie dies durch die Pfeile in Fig. 2 dargestellt ist.

Auf der in Fig. 2 linken Seite ist dabei eine Einstellung gezeigt, wie sie beispielsweise gewählt wird, wenn eine warme Witterung vorliegt. Dabei wird die Strömungsluft durch die Finne 130' in Richtung des Fahrers gelenkt, so dass dieser von kühlender Luft umströmt wird. Ferner wird die Fahrzeugverbreiterung 140' eingefahren, so dass ein geringerer Luftwiderstand vorliegt.

Bei schlechten Witterungsverhältnissen hingegen wird eine Einstellung gewählt, wie sie auf der rechten Seite von Fig. 2 zu erkennen ist. Dabei ist die Finne 130" um etwa 90° gedreht, so dass nun die Feuchtigkeit an dem Fahrer vorbei nach aussen abgeleitet wird. Ferner ist die Verkleidungsverbreiterung 140" ausgefahren, so dass ebenfalls ein Witterungsschutz für den Fahrer im Beinbereich vorhanden ist. Die unterschiedliche rechts- bzw. linksseitige Einstellung in Fig. 2 ist lediglich zur Verdeutlichung gezeigt. Natürlich werden beide Einstellungen symmetrisch gewählt. Insbesondere können die Einstellungen kontinuierlich ineinander übergeführt werden. Natürlich ist es auch möglich, diskrete Positionen für die verstellbaren Verkleidungsteile anzuwählen.

In Fig. 3 ist ein Blockschaltbild einer Schaltungseinrichtung dargestellt, wobei mit der Bezugsziffer 210 eine Steuereinrichtung dargestellt ist. Diese Steuereinrichtung 210 erhält Signale von einem Regensensor 212, einem Temperaturfühler 214, einem Tachometer 213 sowie einem Schalter 216, der im Lenkerbereich angeordnet ist. Der Schalter 216 dient zur Auswahl eines in der Steuervorrichtung 210 vorhandenen Kennfeldes. Entsprechend der Auswahl des Kennfeldes sowie den anliegenden Eingangssignalen des Regensensors 212, des Tachometers 213 sowie des Temperaturfühlers 214 beaufschlagt die Steuereinrichtung 210 Aktoren 218 und 230, die im vorliegenden Fall mit einer Finne 220 und einem Windschild 232 gekoppelt sind und zur Verstellung dieser Fahrzeugteile dienen. Natürlich wäre analog zur ersten Finne noch eine zweite Finne auf der anderen Seite des Motorrads anzuordnen, was aus Vereinfachungsgründen nicht dargestellt wurde.

Insgesamt ist mit der vorliegenden Erfindung eine einfache aber wirkungsvolle Möglichkeit einer automatischen Verstellung von Verkleidungsteilen je nach vorliegender Witterung gegeben. Ein Fahrer muss somit Verstellungen nicht mehr manuell vornehmen. Natürlich kann auch eine Steuerung vorgesehen sein, mit der automatische Einstellungen überschrieben werden können. Diese Maßnahme ist für einen Fachmann jedoch ohne weiteres zu realisieren und braucht beiliegend nicht näher dargestellt zu werden.

## Patentansprüche

1. Vorrichtung zur witterungsabhängigen Verstellung von Verkleidungsteilen eines Motorrades, umfassend
- zumindest einen Sensor zur Erfassung einer Witterungskomponente,
- eine mit dem zumindest einen Sensor verbundene Steuereinrichtung
- zumindest ein verstellbares Verkleidungsteil und einen mit dem verstellbaren Verkleidungsteil gekoppelten Aktuator, wobei der Aktuator mit der Steuereinrichtung verbunden ist und diese den Aktuator in Abhängigkeit von dem Signal des zumindest einen Sensors zur Verstellung des Verkleidungsteils beaufschlagt,
**dadurch gekennzeichnet, dass**
- ein Kennfeld vorgesehen ist, in dem verschiedene, zumindest von einer Witterungskomponente abhängige Versteitwerte für jedes Verkleidungsteil abgelegt sind,
- und die Verstellwerte auch auf die Größe des Fahrers abgestimmt sind.

2. **Vorrichtung nach Anspruch 1,**
**dadurch gekennzeichnet,**
als Sensor ein Temperatursensor zur Erfassung der Umgebungstemperatur vorgesehen ist.

3. Vorrichtung nach Anspruch 1 oder 2,
**dadurch gekennzeichnet,**
**dass** als Sensor ein Regensensor vorgesehen ist.

4. Vorrichtung nach Anspruch 3,
**dadurch** gekennezeichnet,
dass der Regensensor im Frontbereich des Fahrzeugs angeordnet ist.

5. Vorrichtung nach einem der Ansprüche 1 bis 4,
**dadurch gekennzeichnet,**
**dass** als zusätzlicher Sensor ein Tachometer vorgesehen ist.

6. Vorrichtung nach einem der vorhergehenden Ansprüche,
**dadurch gekennzeichnet,**
**dass** das Verkleidungsteil eine Finne ist.

7. Vorrichtung nach Anspruch 6,
**dadurch gekennzeichnet,**
**dass** die Finne verdreh- oder verschwenkbar angeordnet ist.

8. Vorrichtung nach einem der vorhergehenden Ansprüche,
**dadurch gekennzeichnet,**
**dass** als Verkleidungsteil eine nach außen verschwenkbar angeordnete Verkleidungsverbreiterung vorgesehen ist.

9. Vorrichtung nach einem der vorhergehenden Ansprüche,
**dadurch gekennzeichnet,**
**dass** als Verkleidungsteil ein Spoiler vorgesehen ist.

10. Vorrichtung nach einem der vorhergehenden Ansprüche,
**dadurch gekennzeichnet,**
**dass** als Verkleidungsteil ein verstellbares Windschild vorgesehen ist.

11. Vorrichtung nach Anspruch 10,
**dadurch gekennzeichnet,**
**daß** das Kennfeld einpeicher- oder einstellbar ist.

12. Vorrichtung nach einem der vorhergehenden Ansprüche,
**dadurch gekennzeichnet,**
**daß** am Lenkrad ein Schalter vorgesehen ist, mit dem die Programmierung oder Auswahl eines Kennfeldes vorgenommen oder die automatische Steuerung überstimmt werden kann.

## Claims

1. A device for adjusting panelling parts of a motorcycle, depending on the weather conditions, comprising
- at least one sensor for detecting a weather component,
- a control mechanism connected to the at least one sensor,
- at least one adjustable panelling part and an actuator coupled to the adjustable panelling part, the actuator being connected to the control mechanism and the latter acting on the actuator as a function of the signal from the at least one sensor to adjust the panelling part, **characterised in that**
- a characteristic map is provided, in which various adjustment values, which are dependent on at least one weather component, are stored for each panelling part,
- and the adjustment values are also matched to the size of the driver.

2. A device according to claim 1, **characterised in that** a temperature sensor is provided as a sensor to detect the ambient temperature.

3. A device according to claim 1 or 2, **characterised in that** a rain sensor is provided as a sensor.

4. A device according to claim 3, **characterised in that** the rain sensor is arranged in the front region of the vehicle.

5. A device according to any one of claims 1 to 4, **characterised in that** a tachometer is provided as an additional sensor.

6. A device according to any one of the preceding claims, **characterised in that** the panelling part is a fin.

7. A device according to claim 6, **characterised in that** the fin is arranged so as to be twistable or pivotable.

8. A device according to any one of the preceding claims, **characterised in that** a panelling widening, which is arranged so as to be outwardly pivotable, is provided as a panelling part.

9. A device according to any one of the preceding claims, **characterised in that** a spoiler is provided as a panelling part.

10. A device according to any one of the preceding claims, **characterised in that** an adjustable windshield is provided as a panelling part.

11. A device according to claim 10, **characterised in that** the characteristic map can be stored or adjusted.

12. A device according to any one of the preceding claims, **characterised in that** a switch, with which the programming or selection of a characteristic map can be carried out or the automatic control can be overruled, is provided on the steering wheel.

## Revendications

1. Dispositif de réglage de pièces d'habillage d'une moto en fonction des conditions climatiques comprenant :
- au moins un capteur pour détecter un composant météo,
- un dispositif de commande relié à l'au moins un capteur,
- au moins une pièce d'habillage réglable et un actionneur couplé à celle-ci, ce dernier étant relié au dispositif de commande qui sollicite l'actionneur en fonction du signal de l'au moins un capteur pour le réglage de la pièce d'habillage,
**caractérisé en ce qu'**
- il est prévu un champ caractéristique dans lequel sont enregistrées différentes valeurs de réglage dépendant d'un composant météo pour chaque pièce d'habillage, et
- les valeurs de réglage sont également ajustées à la taille du conducteur.

2. Dispositif selon la revendication 1,
**caractérisé par**
un capteur de température ambiante.

3. Dispositif selon la revendication 1 ou 2,
**caractérisé par**
un capteur de pluie.

4. Dispositif selon la revendication 3,
**caractérisé en ce que**
le capteur de pluie est disposé dans la zone avant du véhicule.

5. Dispositif selon l'une quelconque des revendications 1 à 4,
**caractérisé en ce qu'**
un tachymètre sert de capteur supplémentaire.

6. Dispositif selon l'une quelconque des revendications précédentes,
**caractérisé en ce que**
la pièce d'habillage est un déflecteur.

7. Dispositif selon la revendication 6,
**caractérisé en ce que**
le déflecteur est disposé de manière à pouvoir se déplacer angulairement ou pivoter.

8. Dispositif selon l'une quelconque des revendications précédentes,
**caractérisé en ce qu'**
un élargissement d'habillage disposé de manière à pouvoir pivoter vers l'extérieur sert de pièce d'habillage.

9. Dispositif selon l'une quelconque des revendications précédentes,
**caractérisé en ce qu'**
un spoiler (déporteur) sert de pièce d'habillage.

10. Dispositif selon l'une quelconque des revendications précédentes,
**caractérisé en ce qu'**
un pare-brise réglable sert de pièce d'habillage.

11. Dispositif selon la revendication 10,
**caractérisé en ce que**
le champ caractéristique peut être enregistré ou réglé.

12. Dispositif selon l'une quelconque des revendications précédentes,
**caractérisé en ce qu'**
un commutateur permettant de procéder à la programmation ou à la sélection d'un champ caractéristique ou de remplacer la commande automatique est prévu sur le guidon de direction.
